# EUROPEAN PATENT APPLICATION

(11) **EP 3 709 148 A1**
(43) Date of publication of application: **16.09.2020**
(21) Application number: 20157928.1
(22) Date of filing: 16.09.2010
(51) Int. Cl.: G06F 3/0488, G06F 21/36

(54) **METHOD OF PROVIDING A USER INTERFACE OF A MOBILE TERMINAL EQUIPPED WITH A TOUCH SCREEN AND MOBILE TERMINAL THEREFOR**

(30) Priority: 22.09.2009 KR 20090089493
(62) Divisional of application: 10819007.5
(71) Applicant: Samsung Electronics Co., Ltd., Gyeonggi-do 16677 (KR)
(72) Inventor: WATANABE,, Masato, 16677 Suwon-si, (KR); LEE, Jong Seong, 16677 Suwon-si, (KR)
(74) Representative: HGF

(57) **Abstract**

A method of providing an interface in a terminal equipped with a touch screen, including displaying a first screen when receiving an unlock input for displaying the preset first screen. A screen change input for changing a part or an entire of the first screen into a preset second screen is received through the touch screen displaying the first screen; and changing a part of screen displayed on the touch screen from the first screen into the second screen according to a progress of the screen change input.

## Description

### Technical Field

The present invention relates to a method and apparatus for providing an interface for a mobile terminal. More particularly, the present invention relates to a method and apparatus for providing an interface for unlocking a locked state or a state similar to a locked state.

### Background Art

Generally, a portable terminal is an electronic device that enables a user to freely use functions such as wireless communications, accessing networks digital broadcast reception, documentation, and game while not being restricted by a time or a place. The portable terminal includes a display unit displaying the state of portable terminal to the user for more convenient use. The information displayed on the display unit can include information about privacy or secrete information which requires protection, so that a lock function is provided for the protection of privacy for secret information. Moreover, a lock function is provided so as to prevent terminal from being operated due to an unintentional touch input. However, in the state that user is unable to anticipate what kind of information is displayed on the display unit when it is unlocked, or in the state that it is expected that the information about privacy or the secret information is not displayed on the display unit, when an unlock signal is input to unlock, there can be a danger that information about privacy or secret information can be exposed to neighboring persons as the secret information is displayed.

### Disclosure of Invention

### Technical Problem

The present invention provides a method and apparatus for providing an interface for protecting the privacy of user of a mobile terminal.

The present invention further provides a method and apparatus for providing an interface for a mobile terminal that virtually enables to directly manipulate the screen.

### Solution to Problem

In accordance with an exemplary aspect of the present invention, a method of providing an interface in a terminal equipped with a touch screen includes: displaying a preset first screen when receiving an unlock input to display the preset first screen; receiving a screen change input for changing a part or an entirety of the first screen into a preset second screen through the touch screen displaying the first screen; and changing a part of screen displayed on the touch screen from the first preset screen into the second preset screen according to a progress of the screen change input.

In accordance with another exemplary aspect of the present invention, a terminal for providing an interface includes: a touch screen comprising a touch sensor which is configured to receive an unlock input command for displaying a preset first screen and a screen change input for changing a part or an entire of the first screen into a preset second screen, and a display unit configured to display a screen under the control of a controller; and a controller controlling the display unit to display the first screen when the touch sensor receives the unlock input, controlling the display unit to change a part of screen displayed on the display unit from the first screen into the second screen according to a progress of the screen change input through the touch sensor.

According to an exemplary embodiment of the present invention, the privacy of user can be more effectively protected than known heretofore. Moreover, according to an exemplary embodiment of the present invention, an interface can be provided to user by an interface which virtually enables direct manipulation of a screen.

### Advantageous Effects of Invention

The present invention provides a method and apparatus for providing an interface for protecting the privacy of user of a mobile terminal.

The present invention further provides a method and apparatus for providing an interface for a mobile terminal that virtually enables to directly manipulate the screen.

### Brief Description of Drawings

The exemplary objects, features and advantages of the present invention will become more apparent from the following detailed description in conjunction with the accompanying drawings, in which:
FIG. 1 is a block diagram illustrating a configuration of a terminal for providing an interface according to an exemplary embodiment of the present invention;
FIG. 2 is a flowchart illustrating an exemplary operation of a process of providing an interface according to an exemplary embodiment of the present invention;
FIG. 3 is a diagram illustrating a process of providing an interface according to a first exemplary embodiment of the present invention;
FIG. 4 is a diagram illustrating a process of providing an interface according to a second exemplary embodiment of the present invention;
FIG. 5 is a diagram illustrating a process of providing an interface according to a second exemplary embodiment of the present invention; and
FIGS. 6 and 7 are diagrams illustrating a process of providing an interface according to a third exemplary embodiment of the present invention.

### Mode for the Invention

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

Hereinafter, the present invention is illustrated with reference to drawings for illustrating a portable terminal according to exemplary embodiments of the present invention.

Herein, a first screen typically refers to a screen covering a second screen. User can approach the second screen at last after skinning the first screen. The first screen is provided so as to protect the privacy of the user or stir interest to the user. In this document, the second screen refers to a screen required for actual use of the terminal. The second screen includes both a screen required for the function of the conventional terminal and a screen required for the function of the terminal which is to be developed and added.

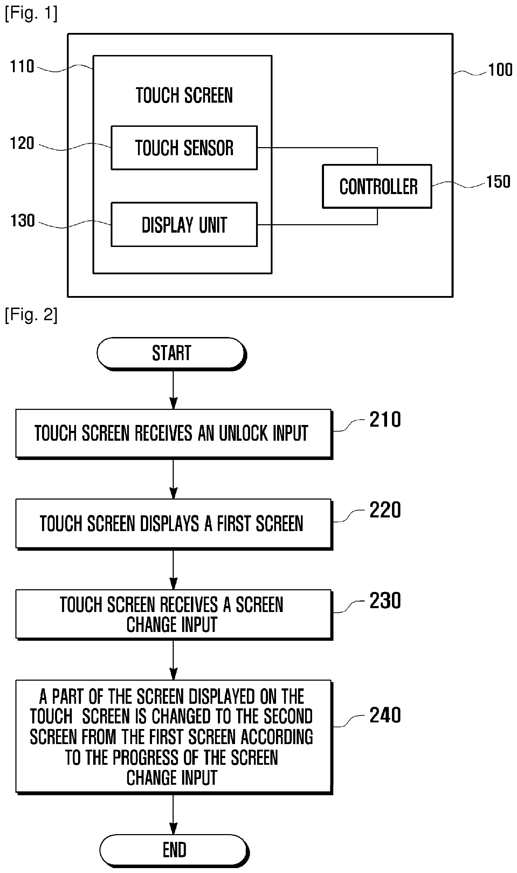

FIG. 1 is a block diagram illustrating a configuration of a terminal for providing an interface 100 according to an exemplary embodiment of the present invention.

Referring now to FIG. 1, the terminal for providing an interface 100 according to an exemplary embodiment of the present invention preferably includes a touch screen 110 and a controller 150. In this example, the touch screen 110 includes a touch sensor 120 and a display unit 130. The touch screen 110 refers to a device that inputs a command or data with a finger or the like by contacting an item displayed on a display screen. The touch screen 110 includes the display unit 130 displaying a screen and a touch panel or touch sensor 120 which senses an input of user and converts into an electrical signal. The display unit 130 can output a screen data which is generated when performing the function of the terminal for providing an interface 100, and status information according to the key manipulation and function setting of the user. Moreover, the display unit 130 can visually display different signals and color information output from the controller 150. Such a display unit 130 can be formed of, for example, a liquid crystal display (LCD) or an organic light-emitting diode (OLED). However, virtually any thin film display can be used with the present invention. The touch sensor 120 can perform the input unit function of receiving an input from the user. The touch sensor 120 can be mounted for folding on the display unit 130, and senses touch by detecting the change of physical quantity generated due to the surface touch of touch sensor 120 by user, and convert the change of physical quantity due to touch into a touch signal and send it to the controller 150. The principle of operation of touch sensor 120 includes a load press method, a fine metal line reclamation method (decompression method), a resistive method, an electrostatic capacitive method, a supersonic wave reflection method, an optical sensor and an electromagnetic induction method. Since the principle of operation of above-described touch sensor 120 is understood by a person skilled in the art of the present invention, the detailed description is omitted from the present disclosure. Particularly, the touch sensor 120 according to an exemplary embodiment of the present invention receives an unlock input and a screen change input. The unlock input is an input that unlocks a locked state of the mobile terminal and the screen change input is an input for converting a first screen which is displayed after the unlock input into a second screen in order to actually use the terminal.

Referring now to FIGS. 2 to 7, the unlock input, the screen change input, the first screen and the second screen are illustrated hereafter in more detail.

The touch sensor 120 can receive the unlock input and the screen change input from a user to convert the touches into a signal and send it to the controller 150. Moreover, the display unit 130 according to an exemplary embodiment of the present invention displays a screen under the control of the controller 150. The controller 150 controls the display unit 130 to display a preset first screen when the touch sensor 120 receives an unlock input, controls the display unit 130 to convert a part of the screen displayed on the display unit 130 according to the progress of the screen change input through the touch sensor 120 into a second screen from the first screen.

The detailed operation of the touch screen 110 and the controller 150 is described in detail later with reference to FIGS. 2 to 7.

FIG. 2 is a flowchart illustrating a process of providing an interface according to an exemplary embodiment of the present invention.

Referring now to FIG. 2, at step (210) in a locked state (or an idle state), the touch screen 110 receives an unlock input.

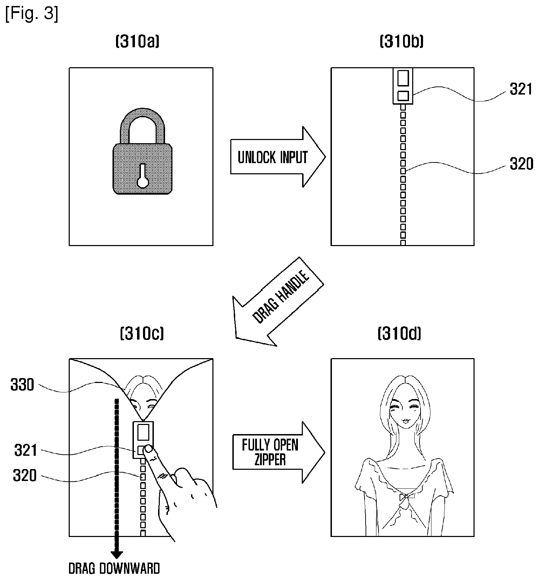

FIG. 3 is a diagram illustrating a process of providing an interface according to a first exemplary embodiment of the present invention.

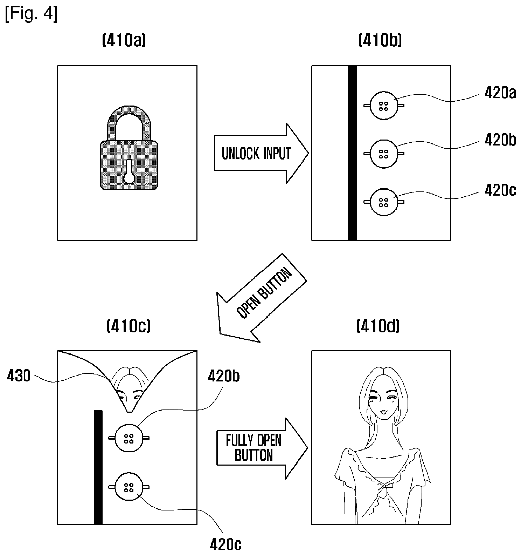

The first drawing 310a of FIG. 3 shows a screen in the locked state. The screen in the locked state can display, for example, a drawing in which a padlock is expressed like the first drawing 310a of FIG. 3, or can display a black screen like the screen of the idle state in which no drawings are expressed. In case of an unlock input, i.e., an idle cancel input is input even in the case of an idle state, i.e., even in the state that nothing is displayed on the screen as nothing is input for a given time, the process like FIGS. 2 and 3 can be performed. The unlock input can include an idle cancel input. In the lock state of the first drawing 310a of FIG. 3, the touch sensor 120 included in the touch screen 110 receives an unlock input. The unlock input can be one or more of various inputs according to the setting of user such as a password input or a simple touch input. In FIG. 2, at step (220) the touch screen 110 which received the "unlock" input displays a preset first screen. The second drawing 310b of FIG. 3 is an example of the preset first screen. In the second drawing 310b of FIG. 3, a zipper 320 is shown. Another example of the preset first screen is presented in FIGS. 4 to 7. The first screen is a screen which covers the second screen by the zipper 320, the button or the like instead of displaying the second screen like a fourth drawing 310d of FIG. 3. After the process of skinning the first screen, user can finally approach the second screen, i.e., the screen necessary for actually using a terminal. Private information or secret information of the user can be displayed on the second screen, but a preset screen that captures the interest of user such as a simple zipper, and a button or the like, is displayed on the first screen. The touch sensor 120 senses the unlock input to convert it into a signal and sends to the controller 150. The controller 150 received the signal controls the display unit 130 to display the first screen.

Referring again to FIG. 2, the touch screen 110 displaying the first screen receives a screen change input. The screen change input is an input for changing the first screen into the second screen. When the screen change input is sufficient, all of the first screen is changed to the second screen, whereas a part of the screen is changed when only a part of screen change input is inputted. For example, when user drags a handle 321 of the zipper 320 such that the center of the handle 321 of the zipper 320 reaches the distance within 20 pixels (preset distance) from the downside of screen, the screen change input can be considered sufficient and the first screen can be changed into the second screen. On the other hand, when the center of the handle 321 of the zipper 320 is positioned in the distance further than 20 pixels (preset distance) from the downside of screen, accordingly, only a part of screen is changed from the first screen to the second screen. However, this partial change may cause the user to desire to see the whole second image, and thus move the zipper image the rest of the way,

In FIG. 3, the screen change input may comprise an input that downwardly drags the vicinity of the handle 321 of the zipper 320 by a user. At step (240) part of the screen displayed on the touch screen is changed to the second screen from the first screen according to the progress of the screen change input. hat is, if user inputs the screen change input that downwardly drags the vicinity of the handle 321 of the zipper 320 like the third screen 310c of FIG. 3, accordingly, a part of the zipper 320 is opened and the screen 330 of the open part of the zipper 320 is changed into the second screen. The other part, i.e., the part that the zipper 320 is not opened is still covered. If the handle 321 of the zipper 320 is sufficiently dragged downwardly, the zipper 320 is considered to be fully opened and the entire screen is changed into the second screen like the fourth screen 310d of FIG. 3. After the entire screen is changed into the second screen, user can see private information or other secret information as if the screen of the mobile terminal is an unlocked state as in the related art.

FIG. 4 is a diagram illustrating a process of providing an interface according to a second embodiment of the present invention.

Referring now to FIG. 2, in the locked state or the idle state, at step (210) the touch screen 110 receives an unlock input. A first drawing 410a of FIG. 4 shows a screen of the lock state. In the lock state of the first drawing 410a of FIG. 4, the touch sensor 120 included in the touch screen 110 receives the unlock input.

In FIG. 2, at step (220) the touch screen 110 received unlock input displays a preset first screen. A second drawing 410b of FIG. 4 is an example of preset first screen. In a second drawing 410b of FIG. 4, a plurality of buttons 420a, 420b, 420c are displayed. The first screen is a screen which covers private information by the zipper or the button 420 instead of displaying private information like a fourth drawing 410d of FIG. 4. The user can approach the second screen, i.e., a screen displaying the private information after the process of skinning the first screen. The touch sensor 120 senses the unlock input to convert into a signal and sends it to the controller 150. The controller 150 receiving this signal controls the display unit 130 to display the first screen. At step (230), the touch screen 110 displaying the first screen receives a screen change input.

In FIG. 4, the screen change input can be an input that user touches buttons 420a, 420b, 420c. At step (240), a part of the screen displayed on the touch screen according to the progress of the screen change input is changed from the first screen to a second screen. In other words, if the user inputs the screen change input that touches the first button 420a like the third screen 410c of FIG. 4, the touched first button 420a is opened. The screen 430 of the open part is changed into the second screen as the first button 420a is opened. The other part, i.e., a part in which the button 420 is not opened is still covered. If all the buttons 420a, 420b, 420c are touched and opened, the entire screen is changed into the second screen as shown in the fourth screen 410d of FIG. 4. After the entire screen changes into the second screen, the user can see private information or other secret information as if it is an unlock state of the related art.

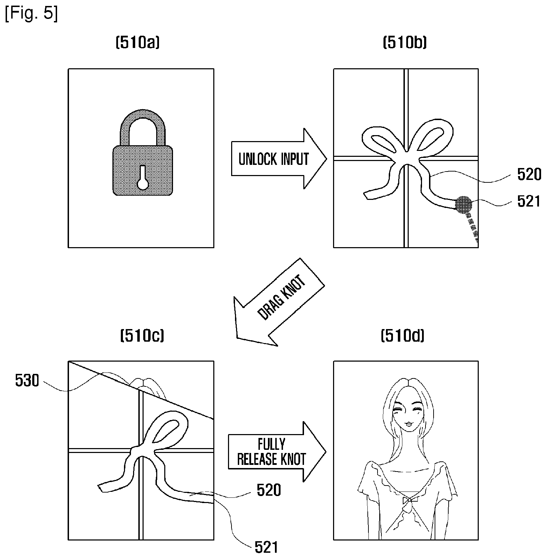

FIG. 5 is a diagram illustrating a process of providing an interface according to a second exemplary embodiment of the present invention

Referring now to FIG. 2, at step (210) in the lock state or the idle state, the touch screen 110 receives an unlock input. A first drawing 510a of FIG. 5 shows a screen of the lock state. In the lock state of the first drawing 510a of FIG. 5, the touch sensor 120 included in the touch screen 110 receives the unlock input. In FIG. 2, at step (220), the touch screen 110 received unlock input displays a preset first screen.

A second drawing 510b of FIG. 5 is another example of preset first screen. In the second drawing 510b of FIG. 5, a knot 520 is displayed.

The first screen 510a is a screen which covers private information by the knot 520 instead of displaying private information, such as in the fourth drawing 510d of FIG. 5. A user can begin to view a second screen, i.e., a screen displaying the private information after the process of skinning the first screen. The touch sensor 120 senses the unlock input to convert it into a signal and sends it to the controller 150. The controller 150 receiving this signal controls the display unit 130 to display the first screen. Then, at step (230), the touch screen 110 displaying the first screen receives a screen change input.

In FIG. 5, the screen change input can be an input in which a user drags an end 521 of the knot 520, so as to in a two-dimensional sense "untie" the knot. At step (240), a part of the screen displayed on the touch screen according to the progress of the screen change input is changed from the first screen to the second screen. In other words, if user inputs the screen change input that drags the end 521 of the knot 520 like the third screen 510c of FIG. 5, then, the knot 520 is released (i.e. untied). The screen 530 of the open part is changed into the second screen as the knot 520 is being released. The other part, i.e., a part in which the knot 520 is not released, is still covered. If the knot 520 is completely released, the entire screen is changed into the second screen, such as shown in the screen display 510d of FIG. 5. After the entire screen is changed into the second screen, the user can view private information or other secret information displayed on the screen as if the device display is an unlocked state.

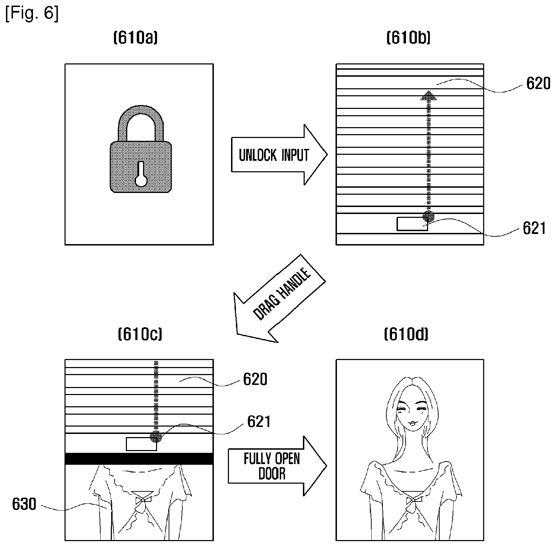

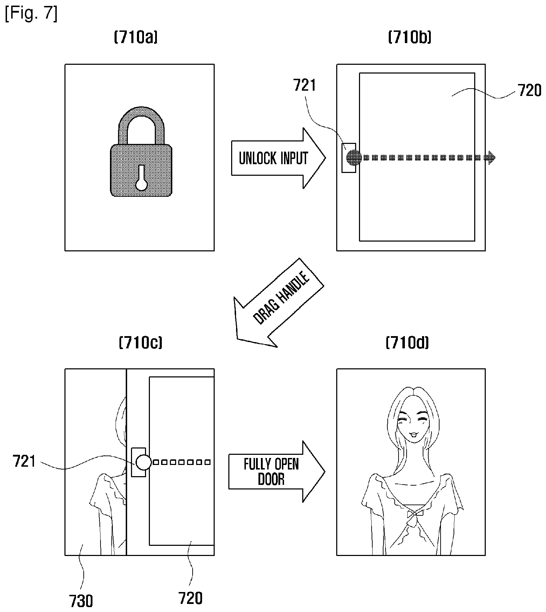

FIGS. 6 and 7 are diagrams illustrating a process of providing an interface according to a third exemplary embodiment of the present invention.

Referring now to FIG. 2, in the locked state or the idle state, at step (210) the touch screen 110 receives an unlock input. A first drawing 610a of FIG. 6 shows a screen of the locked state. In the locked state such as the first drawing 610a of FIG. 6, the touch sensor 120 included in the touch screen 110 receives the unlock input. In FIG. 2, the touch screen 110 received unlock input displays a preset first screen (220). A second drawing 610b of FIG. 6 is an example of preset first screen. In the second drawing 610b, a door 620 which is upwardly opened and downwardly closed is displayed.

A first screen comprises a screen which covers private information by the door 620 which is upwardly opened and downwardly closed instead of displaying private information like drawing 610d of FIG. 6. A User can approach a second screen, i.e., a screen displaying the private information after the process of skinning the first screen. The touch sensor 120 senses the unlock input to convert it into a signal and sends it to the controller 150. The controller 150 receiving this signal controls the display unit 130 to display the first screen. At step (230), the touch screen 110 displaying the first screen receives a screen change input.

In FIG. 6, the screen change input may comprise an input that a user drags in the vicinity of a handle 621 of the door 620. At step (240), a part of the screen displayed on the touch screen according to the progress of the screen change input is changed from the first screen to the second screen. That is, if the user inputs the screen change input in which the user drags in the vicinity of a handle 621 of the door 620 like a screen display 610c of FIG. 6, the door 620 is then opened. Next, the screen 630 of the open part is changed display wise into displaying the second screen as the door 620 is opened. The other part, i.e., a part in which the door 620 is not opened is still covered. If the vicinity of a handle 621 of the door 620 is fully dragged upward, the door 620 is considered fully opened, so that the entire screen is changed into the second screen like the display screen 610d of FIG. 6. After the entire screen is changed into the second screen, a user can see private information or other secret information as if the device is an unlocked state.

An exemplary embodiment shown in FIG. 7 is similar to that of FIG. 6. However, there is a difference in that a door 720 which is opened and closed from side to side is displayed instead of the door 620 which is opened upward and closed downward, and a handle 721 of door 720 is dragged from side to side. In addition, a first display screen 710a, a second display screen 710b, a third display screen 710c, a fourth display screen 710d and a screen 730 having an open part are identical with those of FIG. 6 or substantially correspond to those of FIG. 6.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

### Industrial Applicability

Although exemplary embodiments of the present invention have been described in detail hereinabove, a person of ordinary skill in the art should clearly understand that many variations and modifications of the basic inventive concepts herein taught which may appear to those skilled in the present art will still fall within the spirit and scope of the present invention, as defined in the appended claims.

It will also be appreciated that certain aspects and embodiments of the invention provide subject matter in accordance with the following numbered paragraphs:
Paragraph 1. A method of providing an interface in a terminal equipped with a touch screen, comprising:
   displaying a first screen when receiving an unlock input touch command for displaying a preset first screen;
   receiving a screen change input touch command for changing a part or an entirety of the first screen into a preset second screen through the touch screen displaying the first screen; and
   changing a part of a screen displayed on the touch screen from the first screen into the second screen according to a progress of the screen change input command.
Paragraph 2. The method of Paragraph 1, wherein the received screen change touch input command is a predetermined movement along a specific part of the touch screen that changes screen allocation so that a size of the part of the screen displayed as the first screen is reduced as a part of the touch screen displayed as the second screen is increased in correspondence with a distance of a predetermined movement along the specific part of the touch screen.
Paragraph 3. The method of Paragraph 1, wherein the preset first screen comprises a screen displaying a zipper, and the screen change input comprises a touch input in which a predetermined movement drags a handle of the zipper displayed on the first screen to open, wherein changing a part of the screen displayed on the touch screen from the first screen displayed into the second screen displayed comprises changing a screen display of a part where the zipper is opened from the first screen into the second screen as the handle of zipper is dragged.
Paragraph 4. The method of Paragraph 1, wherein the preset first screen comprises a screen displaying a plurality of buttons, and wherein the screen change input comprises a touch input which touches the plurality of buttons displayed on the first screen to open, wherein changing a part of the screen comprises changing a screen of a part where the button is opened from the first screen into the second screen as the plurality of buttons are opened.
Paragraph 5. The method of Paragraph 1, wherein the preset first screen comprises a screen displaying a knot, wherein the screen change input comprises a touch input which drags a part of the knot displayed on the first screen to release, wherein changing a part of screen comprises changing a part of screen displayed on the touch screen from the first screen into the second screen according to a ratio in which the knot is released.
Paragraph 6. The method of Paragraph 1, wherein the preset first screen comprises a screen displaying a door, wherein the screen change input comprises a touch input which drags a handle of the door displayed on the first screen to open, wherein changing a part of screen comprises changing a display of less than an entirety a screen of a part where the door is opened from the first screen into the second screen as the handle of the door is dragged.
Paragraph 7. A terminal for providing an interface, comprising:
   a touch screen comprising a touch sensor which is configured to receive an unlock input touch command for displaying a preset first screen and a screen change input for changing a part or an entirety of the first screen into a preset second screen, and a display unit which is configured to display a screen under the control of the controller; and
   a controller controlling the display unit to display the first screen when the touch sensor senses the unlock input touch command, controlling the display unit to change a part of screen displayed on the display unit from the first screen into the second screen according to a progress of the screen change input touch command sensed by the touch sensor.
Paragraph 8. The terminal of Paragraph 7, wherein the preset first screen comprises a screen displaying a zipper, and wherein the screen change input comprises a touch input command which drags a handle of the zipper displayed on the first screen to open, and the controller controls the display unit to change a screen of a part where the zipper is opened from the first screen into the second screen as the handle of zipper is dragged.
Paragraph 9. The terminal of Paragraph 7, wherein the preset first screen is a screen displaying a plurality of buttons, the screen change input is a touch input which touches the plurality of buttons displayed on the first screen to open, and the controller controls the display unit to change a screen of a part where the button is opened from the first screen into the second screen as the plurality of buttons are opened.
Paragraph 10. The terminal of Paragraph 7, wherein the preset first screen is a screen displaying a knot, the screen change input touch command is a touch input which drags a part of the knot displayed on the first screen to release, and the controller controls the display unit to change a part of screen displayed on the touch screen from the first screen into the second screen according to a ratio in which the knot is released.
Paragraph 11. The terminal of Paragraph 7, wherein the preset first screen comprises a screen displaying a door, the screen change input touch command is a touch input which drags a handle of the door displayed on the first screen to open the door, and the controller controls the display unit to change a part of the screen where the door is opened from the first screen into the second screen as the handle of the door is dragged.
Paragraph 12. The terminal of Paragraph 7, wherein the received screen change touch input command is a predetermined movement along a specific part of the touch screen that changes screen allocation so that a size of the part of the screen displayed as the first screen is reduced as a part of the touch screen displayed as the second screen is increased in correspondence with a distance of a predetermined movement along the specific part of the touch screen.

## Claims

1. An electronic device comprising:
a touch screen having a display; and
a controller electrically connected with the touch screen,
wherein the controller is configured to:
detect a reception of a first user input while the display is displaying nothing or a blank screen;
control the touch screen to display a first screen in response to the first user input received through the touch screen;
detect a reception of a second user input to display at least part of a second screen; and
control the touch screen to progressively change at least part of the first screen for displaying the at least part of the second screen which is covered with the first screen on the touch screen, in response to a progress direction of the second user input while the first screen is being displayed, and
wherein the second screen is a screen for displaying a function of the electronic device.

2. The electronic device of claim 1, wherein the first user input comprises a touch input.

3. The electronic device of claim 1, wherein the controller is configured to:
identify whether the second user input is identical with a preset gesture input; and
if the second user input is identical with the preset gesture input, to control the touch screen to progressively change at least part of the first screen on the touch screen for displaying the at least part of the second screen in response to the second user input.

4. The electronic device of claim 1, wherein the controller is configured to:
control the touch screen to increase a displayed portion of the second screen if the progress direction of the second user input is a first direction, and
control the touch screen to decrease a displayed portion of the second screen if the progress direction of the second user input is a second direction opposite to the first direction.

5. The electronic device of claim 1, wherein the controller is configured to:
control the touch screen to display the second screen in entirety if a distance between a start point of the second user input and a termination point of the second user input is equal to or greater than a preset distance.

6. A method of providing an interface in an electronic device comprising a touch screen having a display, comprising:
detecting a reception of a first user input while the display is displaying nothing or a blank screen;
controlling the touch screen to display a first screen in response to the first user input received through the touch screen;
detecting a reception of a second user input to display at least part of a second screen; and
controlling the touch screen to progressively change at least part of the first screen for displaying the at least part of the second screen which is covered with the first screen on the touch screen, in response to a progress direction of the second user input while the first screen is being displayed, and
wherein the second screen is a screen for displaying a function of the electronic device.

7. The method of claim 6, wherein the first user input comprises a touch input.

8. The method of claim 6, wherein the controlling the touch screen to progressively change at least part of the first screen comprises:
identifying whether the second user input is identical with a preset gesture input, and
if the second user input is identical with the preset gesture input, controlling the touch screen to progressively change at least part of the first screen on the touch screen for displaying the at least part of the second screen in response to the second user input.

9. The method of claim 6, wherein the controlling the touch screen to progressively change at least part of the first screen comprises:
controlling the touch screen to increase a displayed portion of the second screen if the progress direction of the second user input is a first direction, and
controlling the touch screen to decrease a displayed portion of the second screen if the progress direction of the second user input is a second direction opposite to the first direction.

10. The method of claim 6, wherein the controlling the touch screen to progressively change at least part of the first screen comprises:
controlling the touch screen to display the second screen in entirety if distance between a start point of the second user input and a termination point of the second user input is equal to or greater than a preset distance.

11. An electronic device in accordance with any one of claims 1 to 5, wherein the second screen is a screen executed before the display was changed to displaying nothing or a blank screen.

12. A method in accordance with any one of claims 6 to 10, wherein the second screen is a screen executed before the display was changed to displaying nothing or a blank screen.
